# EUROPÄISCHE PATENTSCHRIFT

(11) **EP 2 236 633 B1**
(45) Veröffentlichungstag und Bekanntmachung des Hinweises auf die Patenterteilung: **26.08.2015**
(21) Anmeldenummer: 10007714.8
(22) Anmeldetag: 09.01.2009
(51) Int. Cl.: C22B 5/12, C22B 7/00, C22B 11/00

(54) **Verfahren zum Gewinnen von Ruthenium aus Ruthenium oder Rutheniumoxide enthaltenden Materialien oder rutheniumhaltigen Edelmetall-Erzkonzentraten**
Method for generating ruthenium from materials or noble metal ore concentrates containing ruthenium or ruthenium oxide
Procédé d'obtention de ruthénium à partir de ruthénium ou de matériaux contenant des oxydes de ruthénium ou des concentrés de minerais de métaux précieux contenant du ruthénium

(30) Priorität: 30.01.2008 DE 102008006796
(43) Veröffentlichungstag der Anmeldung: 06.10.2010
(62) Teilanmeldung aus: 09000185.0
(73) Patentinhaber: Heraeus Deutschland GmbH & Co. KG, 63450 Hanau (DE)
(72) Erfinder: Meyer, Horst, 63674 Altenstadt (DE); Grehl, Matthias, 63773 Goldbach (DE); Nowottny, Christian, 61130 Nidderau (DE); Stettner, Martin, 63674 Altenstadt (DE); Kralik, Joachim, 63450 Hanau (DE)
(74) Vertreter: Kühn, Hans-Christian

(56) Entgegenhaltungen:
- EP-A- 1 026 283
- EP-A- 1 114 796
- EP-A- 1 577 408
- CN-A- 1 872 418
- DD-A1- 261 811
- JP-A- 8 199 350
- JP-A- 59 104 438
- US-A- 6 036 741
- FATHI HABASHI: "Hanbook of Extractive Metallurgy (Vol. 3)" 1997, WILEY-VCH , WEINHEIM , XP002522074 * Seite 1292 - Seite 1306 *
- C.Wegst/M.Wegst: "Stahlschlüssel", 2007, Verlag Stahlschlüssek Wegst GmbH, Marbach ISBN: 978-3-922599-23-4 pages 529-529,

## Beschreibung

Die Erfindung betrifft Verfahren zum Gewinnen von Ruthenium aus Ruthenium oder Rutheniumoxide enthaltenden Materialien oder rutheniumhaltigen Edelmetall-Erzkonzentraten mit weiteren Reinigungsschritten zur Aufarbeitung von Ruthenium-Targets.

### Technischer Hintergrund

Rutheniumhaltige Materialien, in denen das Ruthenium in metallischer oder oxidischer Form vorliegt (Erzkonzentrate, pulvermetallurgisch hergestellte Targetmaterialien aus Rutheniummetall und -legierungen, sonstige Zementate), müssen für die weiteren Reinigungsoperationen aktiviert und in eine wasserlösliche Form gebracht werden.

Zur Mobilisierung und/oder Abtrennung von Ruthenium sind verschiedene Verfahren bekannt:
- Schmelzfluss mit KOH/KNO₃ und anschließende RuO₄-Bildung durch Oxidation der alkalischen Lösung mit Chlorgas (JP39019951; C.Claus, J. prakt. Chem. 79 [1860] 28),
- Oxidation und Auflösen in HCl oder HNO₃ mit Kaliumchlorat als Oxidationsmittel (F. Krauss, Z. anorg. Ch. 117 [1921] 115),
- Nutzung der Löslichkeit in Hypochlorit-Lösung (Howe, JACS 47 [1925] 2928),
- Alkoholfällung von Ruthenium aus stark alkalischer Lösung (C.Claus, J. prakt. Chem. 79 [1860] 28; L. Wöhler, Zeitschrift f. anorg. Chem. 139 [1924] 205-219),
- Behandlung von Ruthenatlösungen nacheinander mit Chlorat und Bromat (EP 1 114 795 A1),
- Erwärmen rutheniumhaltiger salzsaurer Edelmetall-Lösungen und anschließende Zugabe von Chlorat sowie weiteres Erwärmen der entstehenden Suspension/lösung auf 80 bis 90°C und Auffangen des entstehenden Rutheniumtetroxids (US 4,390,366),
- Oxidation von Alkaliruthenat in wässrigen Lösungen (DE 39 35 798 A1), bei dem die Oxidation mit Ozon bei pH-Werten oberhalb von 8 durchgeführt wird. Alternativ kann die vorhandene rutheniumhaltige Edelmetall-Lösung mittels Natriumchlorat und/oder Chlorgas destilliert werden.

EP10262B3A1 offenbart gemäß Absatz [0005] das Mischen rohen Rutheniums mit KOH und KNO₃, worauf eine oxidierende Schmelze durchgeführt wird, um Ruthenium in lösliches Kaliumruthenat überzuführen. Dieses wird dann mit Wasser extrahiert. Dann wird unter Einblasen von Chlorgas erhitzt und so RuO₄ erzeugt, das in einem Gemisch aus verdünnter HCl und Methanol aufgenommen wird. Nach Eindampfen zur Trockne wird der Rückstand in Sauerstoffamosphäre gesintert, wobei sich RuO₂ bildet, das dann durch Zünden in Wasserstoff unter Wasserabgabe zu Ru verbrennt.

JP59104438 beschreibt laut Abstract das Eintauchen von Elektroden in eine KOH/NaNO₃ Schmelze, wodurch die Ru-oxidhaltige Deckschicht aufgelöst wird. Nach Auflösen der resultierenden Mischung in Wasser wird Ru zu RuO₄ oxidiert und das entstehende RuO₄ nach Abdestillieren im Vakuum in HCl eingeleitet. Die Lösung der hochreinen Chloride RuCl₃ und RuCl₄ kann direkt verwendet, eingedampft oder zu Ru reduziert werden.

JP08199350 erwähnt nach der Maschinenübersetzung in Absatz [0010] die Alkalischmelze und das Auslaugen mit Wasser im Rahmen eines Verfahrens zur Herstellung hochreinen Rutheniums zu handeln, bei dem es auch auf möglichst geringe Anteile der der radioaktiven Elemente U und Th ankommt.

CN1872418 beschreibt ein Verfahren zur Herstellung von Rutheniumsalz.

Im Handbook of Extractive Metallurgy wird allgemein die Ru-Abtrennung als RuO₄ beschrieben. Als weitere Reinigung von Ru wird z.B. die Direktreduktion von Ammonniumruthenat beschrieben.

DD261811A1) beschreibt ein Verfahren zur Gewinnung von Ru unter Verwendung von Ionenaustauschern.

EP1114796A1 beschreibt die Abtrennung von Osmium und anschließende Bildung einer Ruthenatlösung.

EP1577408A1 befasst sich mit der Abtrennung von Selen und Tellur von den Metallen der Platingruppe.

US6036741 beschreibt ein Verfahren, in dessen Rahmen RuO₄ mit HCl behandelt und mit NH₄Cl gefällt wird. Das entstandene Ammoniumruthenat wird dann in Wasserstoffatmosphäre bei 300 bis 1200°C zu Ru reduziert (Spalten 2, 4, Beispiel 1).

### Aufgabe

Verfahren nach dem Stand der Technik haben folgende Nachteile: Königswasser oder konzentrierte Säuren/Chlorgas als Oxidationsmittel lösen Ruthenium nicht oder nur sehr langsam. In Natriumhypochloritlauge ist Ruthenium löslich, allerdings bildet sich hier zum Teil direkt das flüchtige Ruthenium (VIII)-oxid. Dadurch ist der Aufschlussschritt nicht vom Abtrennungsschritt zu trennen. Das in Erzkonzentraten enthaltene Selen stört die Reinigung der Edelmetalle in den weiteren Schritten, so dass dessen schnelle Ausschleusung möglichst zu Beginn des Scheideprozesses wünschenswert ist.

### Zusammenfassung der Erfindung

Durch Eintrag rutheniumhaltigen Materials und Nitrat als Oxidationsmittel in eine stark alkalische Kaliumhydroxidschmelze kann eine zufriedenstellende Mobilisierung des Rutheniums erreicht werden. Danach liegt Ruthenium als wasserlösliches Ruthenat (RuO₄)²⁻ vor. Nachfolgende Trennoperationen ermöglichen eine schnelle Ausbringung des Rutheniums sowie die Abtrennung von Selen. Weitere anschließende Reinigungsschritte erlauben die Aufarbeitung von Ruthenium-Targets.

### Detaillierte Beschreibung

Die Erfindung betrifft Verfahren nach Anspruch 1. Weitere vorteilhafte Merkmale sind den weiteren Ansprüchen zu entnehmen.

In Scheidgut enthaltenes Ruthenium wird durch Oxidation in einer alkalischen Schmelze in die wasserlösliche Ruthenat-Form gebracht. Aufgrund der Korrosivität der Schmelze ist dafür nicht jedes Tiegelmaterial geeignet. Als besonders geeignet haben sich Tiegel aus einer NickelbasisLegierung mit hohem Chrom-Anteil erwiesen, wie z. B.

| Typ | Bezeichnung | WST.-Nr. |
|---|---|---|
| INCONEL® 600 | G-Ni-Cr 15 Fe | 2.4816 |
| INCONEL® 601 | G-Ni-Cr 23 Fe | 2.4851 |
| INCONEL® 625 | G-Ni-Cr 22 Mo 9 Nb | 2.4856 |
| INCOLOY® 825 | 10-Ni-Cr 21 Mo | 2.4858 |
| HASTELLOY® C | G-Ni-Cr 18 Mo 16 | 2.4892 |
| HASTELLOY® C 276 | G-Ni Mo 16 Cr 15 W | 2.4819 |
| CARPENTER 20 CB 3 | G-Ni Cr 20 Cu Mo | 2.4660 |

Sie weisen sehr geringen Materialabrieb auf.

In einer möglichen Ausführungsform handelt es sich um eine Schmelze auf der Basis von Erzkonzentrat. Nach Oxidation und Lösen der erkalteten Schmelze in Wasser ist das enthaltene Ruthenium zu >80 % in Lösung gegangen.

In einer weiteren Ausführungsform wird in einer KOH Schmelze mit NaNO₃ behandelte Rutheniumfeine dadurch weiter verarbeitet, dass mit Wasser ausgelaugt wird.
Erfindungsgemäß wird dann in die Lösung Chlorgas eingeleitet, dabei Ruthenat zu Ruthenium (VIII)-oxid oxidiert, welches mit dem Gasstrom abdestilliert und in konzentrierter Salzsäure absorbiert wird.

Die erfindungsgemäßen Verfahren weisen folgende Vorteile auf:
Große Anteile des Rutheniumgehalts von Scheidgutmaterialien werden in kurzer Zeit aktiviert und mobilisiert, wobei Ruthenium in eine wasserlösliche Form überführt wird. Bei Materialien mit geringem Rutheniumgehalt kann mit nachfolgender Alkoholfällung eine Aufkonzentrierung des Rutheniums erreicht werden. Nachfolgende Reinigungsoperationen ermöglichen dann eine schnelle Abtrennung von im Scheidgut enthaltenen, weiteren Edel- und Buntmetallen.
In Erzkonzentraten enthaltenes Osmium geht aufgrund seiner ähnlichen chemischen Eigenschaften den Weg von Ruthenium und kann nach oben beschriebener Destillation durch einen weiteren Reaktionsschritt leicht vom Ruthenium abgetrennt werden (andere Aufschlusswege, bei denen die Edelmetalle in saurer Lösung erhalten werden, würden aufgrund der leichten Bildung und großen Flüchtigkeit von Osmium (VIII)-oxid zu sehr hohen Osmiumverlusten führen).

Der erfindungsgemäße Aufschluss kann mit Vorteil bei der Aufarbeitung von Ru-Targets eingesetzt werden. Das schließt weitere Schritte der Reinigung ein. Es ergibt sich dabei die Prozessabfolge:
Alkalisch oxidierende Schmelze mit gebrauchten Targets;
Lösen in Wasser;
Destillation von RuO₄ unter Zuhilfenahme von Chlor als Oxidationsmittel;
Aufnahme des RuO₄ in HCl;
Aufkonzentration der Lösung;
NH₄Cl Fällung;
Kalzinierung des Ammoniumsalzes bei ca. 600°C, z. B. im Kammerofen;
Rollieren;
Reduktion unter Wasserstoff;
Mahlen, z. B. in Fließbettstrahlmühle.

Die Erfindung betrifft somit auch Verfahren zum Gewinnen von Ruthenium aus Ruthenium Targets, wobei die zerkleinerten Targets direkt einer oben beschriebenen alkalisch oxidierenden Schmelze zugeführt werden. Die Targets können nennenswerte Anteile an Nichtedelmetallen wie Chrom enthalten.

Die Erfindung wird durch die folgenden Beispiele näher erläutert. Teile- und Prozentangaben beziehen sich wie in der übrigen Beschreibung auf das Gewicht, sofern nicht anders angegeben.

Beispiel 1: In einem Schmelztiegel bestehend aus einer Nickelbasislegierung werden 275 kg Kaliumhydroxid und 14 kg Natriumnitrat bei 400-450°C aufgeschmolzen. Wenn eine klare Schmelze entstanden ist, werden unter Rühren 53 kg einer metallische Rutheniumfeine, enthaltend ca. 98 % (w/w) Ruthenium, mit 41 kg Natriumnitrat vorgemischt, in die Schmelze langsam eingetragen. Nach beendeter Zugabe wird die Temperatur auf 600°C erhöht und noch 6 Stunden nachgerührt. Vor der weiteren Bearbeitung lässt man die Schmelze erkalten.

Beispiel 2: Analog Beispiel 1 werden 84 kg zum Recycling anstehende Sputtertargets, bestehend aus 70 kg Ruthenium mit 17 % Chrom, in einem Schmelztiegel mit 400 kg Kaliumhydroxid und 84 kg Natriumnitrat aufgeschmolzen. Nach dem Erkalten wird die Schmelze in 1600 I Wasser gelöst und durch Einleiten von Chlorgas Ruthenium (VIII)-oxid abdestilliert und dieses in konzentrierter Salzsäure absorbiert. Die auf diese Weise erhaltene Absorberlösung enthält 68,87 kg Ruthenium als reine Rutheniumchlorid-Lösung.

## Patentansprüche

1. Verfahren zum Gewinnen von Ruthenium aus Ruthenium oder Rutheniumoxide enthaltenden Materialien mit den Schritten
**1A**. **i)** Eintrag des Materials in eine Alkalihydroxidschmelze in Gegenwart von Nitrat als Oxidationsmittel unter Bildung von wasserlöslichem Ruthenat (RuO₄)²⁻,
**1A. ii)** Lösen des erhaltenen oxidierten Schmelzrückstandes in Wasser unter Erhalt einer ruthenathaltigen Lösung,
**1B.** Behandlung der ruthenathaltigen Lösung mit einem Oxidationsmittel,
**1C.** Abdestillieren des entstandenen RuO₄ ,
**1D.** Aufnehmen des RuO₄ aus Schritt **1C** in Salzsäure
**1E.** Konzentration der Salzsäurelösung,
**1F.** Fällung eines Ammoniumruthenats mit NH₄Cl,
**1G**. Kalzinierung des Ammoniumruthenats.
**1H.** Rollieren,
**1I**. Reduktion unter Wasserstoff,
**1J**. Mahlen.

2. Verfahren nach Anspruch 1, wobei die Ruthenium oder Rutheniumoxide enthaltenden Materialien Ruthenium-Targets sind.

3. Verfahren nach Anspruch 1, wobei Schritt
1 G bei 450 -700°C erfolgt.

4. Verfahren nach Anspruch 1, wobei Schritt
**1G** bei 600°C erfolgt.

5. Verfahren nach einem der vorstehenden Ansprüche, **dadurch gekennzeichnet dass** Schritt **1A i)** in einer Apparatur aus einer Nickelbasislegierung durchgeführt wird, die einen Cr-Anteil von mindestens 10 Gew.% hat.

6. Verfahren nach einem der vorstehenden Ansprüche, wobei die Alkalihydroxidschmelze eine KOH-Schmelze ist.

7. Verfahren nach einem der vorstehenden Ansprüche, wobei das Nitrat NaNO₃ ist.

## Claims

1. Process for the recovery of ruthenium from materials containing ruthenium or ruthenium oxides comprising the steps of
**1 A.** i) introducing the material into an alkali hydroxide melt in the presence of nitrate as oxidising agent while forming water-soluble ruthenate (RuO₄)²⁻ ;
**1A.** ii) dissolving the oxidised melt residue thus obtained in water while obtaining a ruthenate-containing solution;
**1B.** treating the ruthenate-containing solution with an oxidising agent;
**1C**. distilling the RuO₄ thus produced;
**1D.** taking up the RuO₄ from step 1 C in hydrochloric acid;
**1E.** concentrating the hydrochloric acid solution;
**1F.** precipitating an ammonium ruthenate with NH₄Cl;
**1G.** calcinating the ammonium ruthenate;
**1H**. tumbling;
**1I.** performing a reduction in the presence of hydrogen;
**1J.** grinding.

2. Process according to claim 1, whereby the materials containing ruthenium or ruthenium oxides are ruthenium targets.

3. Process according to claim 1, whereby step 1G proceeds at 450-700°C.

4. Process according to claim 1, whereby step 1 G proceeds at 600°C.

5. Process according to any one of the preceding claims, **characterised in that** step 1 A i) is performed in an apparatus made of a nickel base alloy that has a Cr fraction of at least 10 % by weight.

6. Process according to any one of the preceding claims, whereby the alkali hydroxide melt is a KOH melt.

7. Process according to any one of the preceding claims, whereby the nitrate is NaNO₃.

## Revendications

1. Procédé d'extraction du ruthénium de matériaux contenant du ruthénium ou de l'oxyde de ruthénium, comprenant les étapes suivantes
**1A.** i) Introduction du matériau dans une fonte d'hydroxyde alcalin en présence de nitrate en tant qu'agent oxydant avec formation de ruthénat soluble dans l'eau (RuO₄)²⁻,
**1A.** ii) Dissolution des résidus de fonte oxydés obtenus dans de l'eau avec obtention d'une solution contenant du ruthénat,
**1B.** Traitement de la solution contenant du ruthénat avec un agent oxydant,
**1C.** Distillation du RUO₄ produit,
**1D.** Recueil du RUO₄ de l'étape 1C dans de l'acide chlorhydrique,
**1E.** Concentration de la solution d'acide chlorhydrique,
**1F.** Précipitation d'un ruthénat d'ammonium avec du NH₄Cl,
**1G**. Calcination du ruthénat d'ammonium
**1H.** Roulement,
**1I**. Réduction sous hydrogène,
**1J**. Pulvérisation.

2. Procédé selon la revendication 1, dans lequel les matériaux contenant du ruthénium ou de l'oxyde de ruthénium sont des cibles de ruthénium.

3. Procédé selon la revendication 1, dans lequel l'étape 1 G est effectuée à 450 - 700°C.

4. Procédé selon la revendication 1, dans lequel l'étape 1 G est effectuée à 600°C.

5. Procédé selon l'une des revendications correspondantes, **caractérisé en ce que** l'étape 1 A i) est effectuée dans un appareil d'un alliage à base de nickel, qui a une teneur en Cr d'au moins 10 % en poids.

6. Procédé selon l'une des revendications correspondantes, dans lequel la fonte d'hydroxyde alcalin est une fonte de KOH.

7. Procédé selon l'une des revendications correspondantes, dans lequel le nitrate est du NaNO₃.
